# EUROPEAN PATENT SPECIFICATION

(11) **EP 3 629 448 B1**
(45) Date of publication and mention of the grant of the patent: **29.09.2021**
(21) Application number: 19194661.5
(22) Date of filing: 30.08.2019
(51) Int. Cl.: H02K 1/27

(54) **ROTOR AND MOTOR**
ROTOR UND MOTOR
ROTOR ET MOTEUR

(30) Priority: 27.09.2018 JP 2018181827
(43) Date of publication of application: 01.04.2020
(73) Proprietor: Nidec Corporation, Kyoto-shi, Kyoto 601-8205 (JP)
(72) Inventor: HU, Yabo, Kyoto, 601-8205 (JP); UEDA, Tomoya, Kyoto, 601-8205 (JP)
(74) Representative: Viering, Jentschura & Partner mbB Patent- und Rechtsanwälte

(56) References cited:
- JP-A- 2009 131 140
- JP-A- 2017 139 877
- JP-B2- 5 057 171
- US-A1- 2018 248 434

## Description

### BACKGROUND OF THE INVENTION

### 1. Field of the Invention

The present disclosure relates to a rotor and a motor.

### 2. Description of the Related Art

A known rotor includes a rotor core having an inner annular-shaped portion, an outer annular-shaped portion including a plurality of sector segments disposed in a ring shape, and coupling arms connecting the inner annular-shaped portion and the sector segments to each other, and permanent magnets each located between corresponding ones of the sector segments. For example, Japanese Unexamined Patent Application Publication No. 2015-107051 describes a configuration in which the number of coupling arms is reduced in order to reduce magnetic leakage.

However, in a configuration such as that in Japanese Unexamined Patent Application Publication No. 2015-107051 described above, for example, the magnetic flux easily flows toward the radial-direction inner side from the coupling arms each coupled to the circumferential-direction center of a corresponding one of the sector segments, and the magnetic leakage may not be sufficiently reduced. Therefore, the rotational torque of the motor provided with the rotor may not be sufficiently improved.

Exemplary rotors are known from US 2018/248434 A1, JP 5 057171 B2, JP 2017 139877 A, and JP 2009 131140 A.

### SUMMARY OF THE INVENTION

It is an object of the present disclosure to provide a rotor having a structure capable of suitably reducing leakage magnetic flux and improving the torque of a motor, and a motor including such a rotor.

According to the present invention, a rotor according to claim 1 and a motor according to claim 13 are provided.

A rotor according to an aspect of the present disclosure is a rotor rotatable about a center axis. The rotor includes: a rotor core including an inner core portion that has an annular shape along a circumferential direction, a plurality of outer core portions disposed at intervals from each other along the circumferential direction on a radial-direction outer side of the inner core portion, and a plurality of connecting portions located between the outer core portions and the inner core portion in a radial direction and connecting the outer core portions and the inner core portion to each other; and a plurality of magnets each located between corresponding ones of the outer core portions adjacent in the circumferential direction and disposed on the radial-direction outer side of the inner core portion. Each of the outer core portions is connected to the inner core portion by two of the connecting portions extending toward a radial-direction inner side from both circumferential-direction end portions of the outer core portion. The plurality of connecting portions include pairs of the connecting portions each interposing a radial-direction inner end portion of a corresponding one of the magnets in the circumferential direction. Each of the pairs of the connecting portions has contact portions that are in contact with circumferential-direction side surfaces of the radial-direction inner end portion of the corresponding magnet. The contact portions are uniform in a circumferential-direction dimension and extend along the circumferential-direction side surfaces.

A motor according to an aspect of the present disclosure includes the rotor described above.

According to an aspect of the present disclosure, leakage magnetic flux can be suitably reduced and the torque of a motor can be improved.

### BRIEF DESCRIPTION OF THE DRAWINGS

Fig. 1 is a sectional view illustrating a motor of the present embodiment.
Fig. 2 is a sectional view illustrating a portion of the motor of the present embodiment, and is a sectional view taken along the line II-II in Fig. 1.
Fig. 3 is a sectional view illustrating a portion of a rotor of the present embodiment, and is a sectional view taken along the line III-III in Fig. 2.
Fig. 4 is a sectional view illustrating a portion of a rotor which is a modification example of the embodiment.

### DESCRIPTION OF THE PREFERRED EMBODIMENTS

The Z-axis direction appropriately illustrated in each drawing is an up-down direction in which the positive side is an "upper side" and the negative side is a "lower side". A center axis J appropriately illustrated in each drawing is an imaginary line which is parallel to the Z-axis direction and extends in the up-down direction. In the following description, an axial direction of the center axis J, that is, a direction parallel to the up-down direction will simply be referred to as "axial direction", a radial direction centered on the center axis J will simply be referred to as "radial direction", and a circumferential direction centered on the center axis J will simply be referred to as "circumferential direction".

Further, the up-down direction, the upper side, and the lower side are merely terms for explaining the relative positional relationship between respective elements, and the actual arrangement relationship or the like may be an arrangement relationship or the like other than the arrangement relationship indicated by these names or the like.

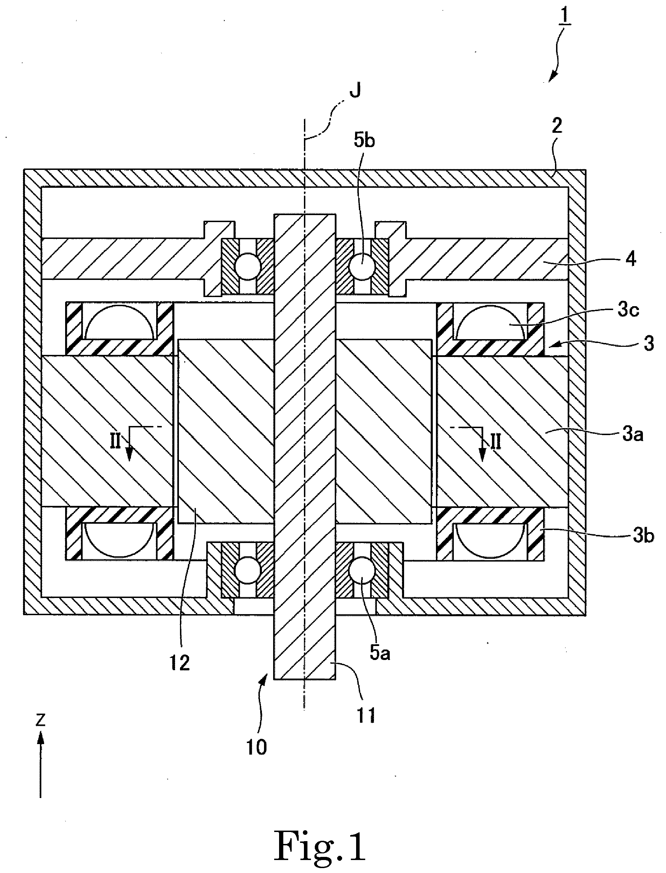

As illustrated in Fig. 1, a motor 1 of the present embodiment includes a housing 2, a rotor 10, a stator 3, a bearing holder 4, and bearings 5a and 5b. The housing 2 houses the rotor 10, the stator 3, the bearing holder 4 and the bearings 5a and 5b. The stator 3 is positioned on the radial-direction outer side of the rotor 10. The stator 3 has a stator core 3a, an insulator 3b, and a plurality of coils 3c. The plurality of coils 3c are attached to the stator core 3a via the insulator 3b. The bearing holder 4 holds the bearing 5b.

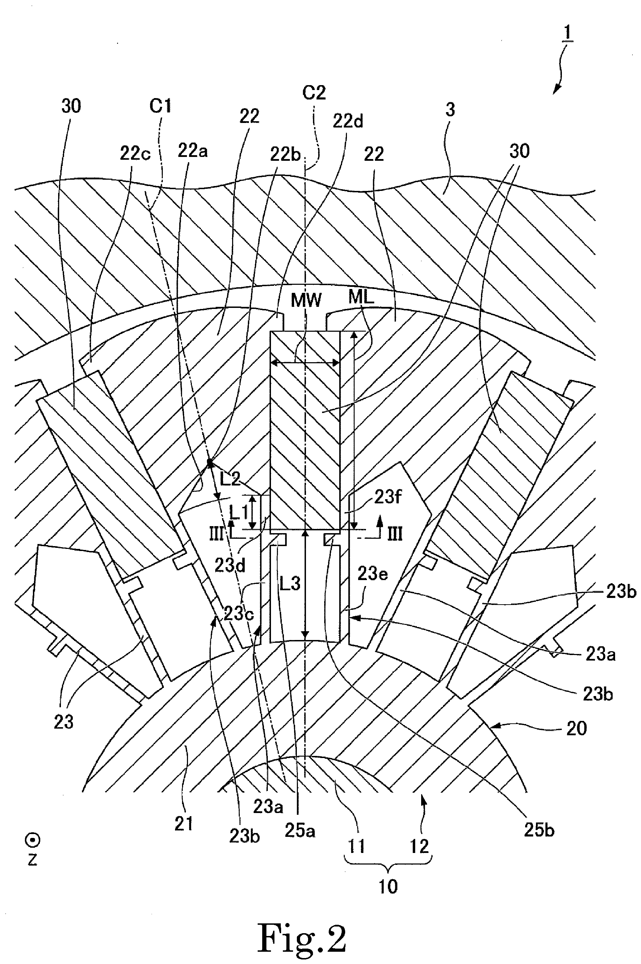

The rotor 10 of the present embodiment is rotatable around the center axis J. The rotor 10 includes a shaft 11 and a rotor body 12. The shaft 11 has a cylindrical shape extending in the axial direction about the center axis J. The shaft 11 is supported about the center axis J by the bearings 5a and 5b so as to be capable of rotation. The rotor body 12 is fixed to the outer circumferential surface of the shaft 11. As illustrated in Fig. 2, the rotor body 12 includes a plurality of magnets 30 and a rotor core 20. That is, the rotor 10 includes the plurality of magnets 30 and the rotor core 20.

The plurality of magnets 30 are permanent magnets. The plurality of magnets 30 are disposed at intervals from each other along the circumferential direction. Although not illustrated, in the present embodiment, the plurality of magnets 30 are disposed at equal intervals along the circumferential direction. Each of the magnets 30 has an N pole and an S pole as magnetic poles disposed along the circumferential direction. The magnetic poles of the magnets 30 adjacent in the circumferential direction face each other in the circumferential direction. That is, for each pair of the magnets 30 adjacent in the circumferential direction, for example, when the magnetic pole on another circumferential-direction side of the magnet 30 located on one circumferential-direction side is N, the magnetic pole on the one circumferential-direction side of the magnet 30 located on the other circumferential-direction side is the N pole. In addition, for example, when the magnetic pole on the other circumferential-direction side of the magnet 30 located on the one circumferential-direction side is the S pole, the magnetic pole on the one circumferential-direction side of the magnet 30 located on the other circumferential-direction side is the S pole. The magnets 30 have, for example, a rectangular parallelepiped shape. The magnets 30, when viewed in the axial direction, have a rectangular shape extending in the radial direction.

In Fig. 2, a circumferential center line C2 is illustrated as an imaginary line passing through the circumferential-direction center of the magnet 30. The circumferential-direction center line C2 extends in a direction passing through the circumferential-direction center of the magnet 30 in the radial direction. Both circumferential-direction side surfaces of the magnet 30 are flat surfaces parallel to the axial direction and parallel to the circumferential center line C2.

The rotor core 20 is a magnetic body excited by the magnets 30. The rotor core 20 includes an inner core portion 21, a plurality of outer core portions 22, a plurality of connecting portions 23, and projecting portions 25a and 25b. Although not illustrated, the inner core portion 21 has an annular shape along the circumferential direction. In the present embodiment, the inner core portion 21 has an annular shape centered on the center axis J. The shaft 11 is made to pass through the radial-direction inner side of the inner core portion 21. The inner core portion 21 and the shaft 11 are fixed, for example, by press-fitting. The inner core portion 21 is disposed on the radial-direction inner side of the plurality of magnets 30.

The plurality of outer core portions 22 are arranged at intervals in the circumferential direction on the radial-direction outer side of the inner core portion 21. Although not illustrated, in the present embodiment, the plurality of outer core portions 22 are disposed at equal intervals along the circumferential direction. The outer core portions 22 are located at positions on the radial-direction outer side separated from the inner core portion 21.

In Fig. 2, a circumferential-direction center line C1 is illustrated as an imaginary line passing through the circumferential-direction center of the outer core portion 22. The circumferential-direction center line C1 extends in a direction passing through the circumferential-direction center of the outer core portion 22 in the radial direction. The outer core portion 22 extends in the radial direction along the circumferential-direction center line C1. In the following description, in the outer core portion 22, the side away from the circumferential-direction center line C1 in the circumferential direction is referred to as "the circumferential-direction outer side" and the side near the circumferential center line C1 in the circumferential direction is referred to as the "circumferential-direction inner side".

A circumferential-direction dimension of the outer core portion 22 increases toward the radial-direction outer side. The side surfaces on both circumferential-direction sides of the outer core portion 22 are flat surfaces which are parallel to the axial direction and are mutually inclined. The side surfaces on both circumferential-direction sides of the outer core portion 22, when viewed in the axial direction, tilt to positions on the circumferential-direction outer side as extending toward the radial-direction outer side. In the present embodiment, the one-circumferential-direction-side side surface of the outer core portion 22 is parallel to the circumferential-direction center line C2 of the magnet 30 adjacent to the one circumferential-direction side of the outer core portion 22. In the present embodiment, the other-circumferential-direction-side side surface of the outer core portion 22 is parallel to the circumferential-direction center line C2 of the magnet 30 adjacent to the other circumferential-direction side of the outer core portion 22.

At radial-direction outer end portions of both circumferential-direction side surfaces of the outer core portion 22, projecting portions 22c and 22d that protrude outward in the circumferential direction are provided. Although not illustrated, the projecting portions 22c and 22d extend from an upper end portion to a lower end portion of the outer core portion 22. The radial-direction-outer-side end surface of the outer core portion 22, when viewed along the axial direction, is a curved surface that projects toward the radial-direction outer side. The radial-direction-outer-side end surface of the outer core portion 22 curves toward the radial-direction inner side as extending from the circumferential-direction centerline C1 toward the circumferential-direction outer side.

Each of the outer core portions 22 has a recessed portion 22a that is recessed toward the radial-direction outer side from the circumferential-direction center of the radial-direction inner end portion of the outer core portion 22. Both circumferential-direction side surfaces of the recessed portion 22a are inclined toward each other in the circumferential direction as extending toward the radial-direction outer side, and are connected at a radial-direction outer end portion of the recessed portion 22a. A connection point 22b between both circumferential-direction side surfaces of the recessed portion 22a is disposed on the circumferential-direction centerline C1. Both circumferential-direction side surfaces of the recessed portion 22a are flat surfaces parallel to the axial direction and inclined toward each other. The interior of the recessed portion 22a, when viewed along the axial direction, has a triangular shape with the connection point 22b as one vertex.

In the present embodiment, the recessed portion 22a is provided at a radial-direction-inner-side end portion of the outer core portion 22 except at both circumferential-direction end portions to which two connecting portions 23 described later are connected. The portions of the outer core portion 22 located on both circumferential-direction sides of the recessed portion 22a include the radial-direction-inner-side end portion of the outer core portion 22, and the circumferential-direction dimension thereof increases as the portions extend from the radial-direction inner side toward the radial-direction outer side.

The plurality of magnets 30 are respectively positioned between the outer core portions 22 adjacent in the circumferential direction. Both circumferential-direction side surfaces of the magnets 30 located between the outer core portions 22 adjacent in the circumferential direction contact the circumferential-direction side surfaces of the outer core portions 22 adjacent in the circumferential direction. The outer core portions 22 and the magnets 30 are fixed to each other, for example, by an adhesive or the like.

Each of the outer core portions 22 is excited by a corresponding pair of the magnets 30 arranged adjacent to each other in the circumferential direction. When the magnetic poles on the outer core portion 22 side of the pair of magnets 30 adjacent to the outer core portion 22 are the N pole, the outer core portion 22 is excited to the N pole. When the magnetic poles on the outer core portion 22 side of the pair of magnets 30 adjacent to the outer core portion 22 are the S pole, the outer core portion 22 is excited to the S pole. The outer core portions 22 excited to the N pole and the outer core portions 22 excited to the S pole are alternately arranged along the circumferential direction.

A radial-direction-outer-side end portion of the outer core portions 22 is located on the radial-direction outer side of a radial-direction-outer-side end portion of the magnets 30. The projecting portions 22c and 22d of the outer core portions 22 are disposed on the radial-direction outer side of the magnets 30 so as to face each other. In the present embodiment, the projecting portions 22c and 22d are in contact with the radial-direction-outer-side surface of the magnets 30. The magnets 30 are pressed from the radial-direction outer side by the pair of projecting portions 22c and 22d provided on the outer core portions 22 adjacent in the circumferential direction. Thereby, the magnets 30 are suppressed from slipping toward the radial-direction outer side of the rotor core 20.

The radial-direction-inner-side end portion of the outer core portions 22 is located on the radial-direction outer side of a radial-direction-inner-side end portion of the magnets 30. The radial-direction-inner-side end portion of the magnets 30 is disposed on the radial-direction outer side of the outer circumferential surface of the inner core portion 21. That is, the magnets 30 are disposed on the radial-direction outer side of the inner core portion 21.

The plurality of connecting portions 23 are located between the outer core portions 22 and the inner core portion 21 in the radial direction. The plurality of connecting portions 23 connect the outer core portions 22 and the inner core portion 21 to each other. Two connecting portions 23 are provided for each of the outer core portions 22. That is, the number of the connecting portions 23 is twice the number of the outer core portions 22. The number of the connecting portions 23 is twice the number of the magnets 30. The two connecting portions 23 extend toward the radial-direction inner side from both circumferential-direction end portions of the outer core portion 22. As a result, each of the outer core portions 22 is connected to the inner core portion 21 by two connecting portions 23 extending toward the radial-direction inner side from both circumferential-direction end portions of the outer core portion 22. Therefore, the outer core portions 22 can be firmly connected to the inner core portion 21. Therefore, the strength of the rotor core 20 can be improved. In addition, thereby, even if a support body, such as a resin mold, is not provided, it is easy to sufficiently secure strength for the rotor 10, and the number of components of the rotor 10 can be decreased.

In the present embodiment, the two connecting portions 23 extending to the radial-direction inner side from both circumferential end portions of the outer core portion 22 are directly connected to the inner core portion 21. Therefore, for example, compared with the case where two connecting portions 23 are connected to each other on the radial-direction outer side of the inner core portion 21, become one, and are connected to the inner core portion 21, the connection strength between the outer core portion 22 and the inner core portion 21 can be improved.

In the present embodiment, the connecting portions 23 extend in a straight line on the whole. The two connecting portions 23 connected to one outer core portion 22 extend toward positions on the circumferential-direction inner side as extending toward the radial-direction inner side, that is, they extend in a direction approaching each other in the circumferential direction as extending toward the radial-direction inner side. The connecting portion 23 extending toward the radial-direction inner side from one circumferential-direction side end portion of the outer core portion 22 extends parallel to a circumferential-direction center line C2 of the magnet 30 adjacent to the one circumferential-direction side of the outer core portion 22 and extends parallel to both circumferential-direction side surfaces of the magnet 30. The connecting portion 23 extending toward the radial-direction inner side from the other circumferential-direction end portion of the outer core portion 22 extends parallel to a circumferential-direction center line C2 of the magnet 30 adjacent to the other circumferential-direction side of the outer core portion 22 and extends parallel to both circumferential-direction side surfaces of the magnet 30.

The circumferential-direction-outer-side side surfaces of the two connecting portions 23 connected to the outer core portion 22 are parallel to both respective circumferential-direction side surfaces of the outer core portion 22 and connect to the radial-direction inner end portions on both circumferential-direction sides of the outer core portion 22, respectively, without a level difference. The radial-direction outer end portions of the circumferential-direction-inner-side side surfaces of the two connecting portions 23 connected to the outer core portion 22 are connected to the radial-direction inner end portions of both circumferential-direction side surfaces of the recessed portion 22a. In each of the two connecting portions 23 connected to the outer core portion 22, the circumferential-direction-outer-side side surface and the circumferential-direction-inner-side side surface are parallel to each other.

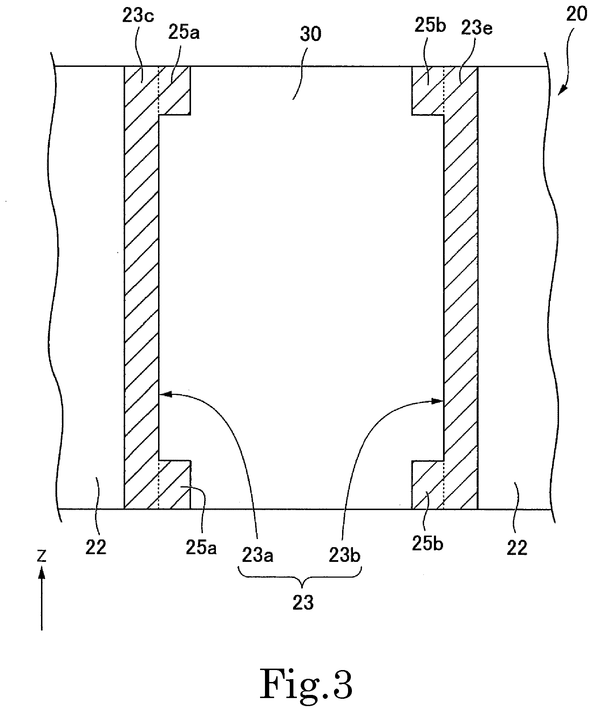

In the present embodiment, a circumferential-direction dimension of the connecting portions 23 is uniform throughout the direction in which the connecting portions 23 extend. The circumferential-direction dimension of the connecting portions 23 is smaller than the circumferential-direction dimension of the outer core portions 22. The circumferential-direction dimension of the connecting portions 23 is smaller than the circumferential-direction dimension MW of the magnets 30. The circumferential-direction dimension of the connecting portions 23 is smaller than a quarter of the circumferential-direction dimension at the radial-direction-inner-side end portion of the outer core portions 22. In the present embodiment, the circumferential-direction dimension of the connecting portions 23 is smaller than one eighth of the circumferential-direction dimension at the radial-direction-inner-side end portion of the outer core portions 22. As illustrated in Fig. 3, in the present embodiment, an axial-direction dimension of the connecting portions 23 is the same as an axial-direction dimension of the outer core portions 22.

Further, in the present specification, "the circumferential-direction dimension is uniform" includes not only the case where the circumferential-direction dimension is strictly the same but also the case where the circumferential-direction dimension is substantially the same.

As illustrated in Fig. 2, for the pair of outer core portions 22 adjacent in the circumferential direction, the connecting portion 23 connected to the other circumferential-direction side end portion of the outer core portion 22 located on the one circumferential-direction side, and the connecting portion 23 connected to the other circumferential-direction side end portion of the outer core portion 22 located on the other circumferential-direction side are a pair of connecting portions 23a and 23b interposing the radial-direction inner end portion of the magnet 30 located between the pair of outer core portions 22 adjacent in the circumferential direction. That is, the plurality of connecting portions 23 include the pair of connecting portions 23a and 23b that interpose the radial-direction inner end portion of the magnet 30 in the circumferential direction. Further, in the following description, the pair of connecting portions 23a and 23b interposing the radial-direction inner end portion of the magnet 30 in the circumferential direction may be simply referred to as "the pair of connecting portions 23a and 23b".

The pair of connecting portions 23a and 23b respectively have contact portions 23d and 23f in contact with the circumferential-direction side surfaces of the radial-direction inner end portion of the magnet 30, and noncontact portions 23c and 23e not in contact with the magnet 30. The contact portion 23d is a portion including the radial-direction-outer-side end portion of the connecting portion 23a, that is, the portion that connects with the outer core portion 22. The contact portion 23f is a portion including the radial-direction-outer-side end portion of the connecting portion 23b, that is, the portion that connects with the outer core portion 22. The noncontact portion 23c is a portion connected to the radial-direction inner side of the contact portion 23d. The non-contact portion 23e is a portion connected to the radial-direction inner side of the contact portion 23f. The non-contact portions 23c and 23e are connected to the outer peripheral surface of the inner core portion 21.

The contact portions 23d and 23f have uniform circumferential-direction dimensions and extend along the circumferential-direction side surfaces of the magnet 30 with which they are in contact. Thereby, the leakage magnetic flux can be suitably reduced, and the torque of the motor 1 can be improved. Hereinafter, this effect will be described in detail. Further, in the following description of the effect, for example, the case where the outer core portion 22 is excited to the N pole will be described as an example.

For example, the case where the outer core portion 22 and the inner core portion 21 are connected by only one connecting portion extending toward the radial-direction inner side from the circumferential-direction center of the outer core portion 22 will be considered. In this case, the connecting portion does not contact the circumferential-direction side surfaces of the radial-direction inner end portion of the magnet 30 and is exposed to the space between the inner core portion 21 and the outer core portion 22 in the radial direction. In this case, the magnetic flux easily leaks from the radial-direction inner end portion of the magnet 30 into the space. In addition, in the outer core portion 22, the magnetic flux flowing into the outer core portion 22 from the magnets 30 adjacent to the outer core portion 22 in the circumferential direction merges at the circumferential-direction center of the outer core portion 22 and flows toward the radial-direction outer side. Therefore, when the connecting portion is connected to the circumferential-direction center of the outer core portion 22, the magnetic flux merged in the outer core portion 22 easily flows from the connecting portion to the inner core portion 21. As a result, the leakage magnetic flux tends to be large, and there is a problem that the rotational torque of a motor provided with the rotor is reduced.

On the other hand, according to the present embodiment, the pair of connecting portions 23a and 23b interposing the radial-direction inner end portion of the magnet 30 in the circumferential direction have the contact portions 23d and 23f in contact with the circumferential-direction side surfaces of the radial-direction inner end portion of the magnet 30, respectively. Therefore, the magnetic flux from the radial-direction inner end portion of the magnet 30 can easily flow into the contact portions 23d and 23f. At least a portion of the magnetic flux flowing into the contact portions 23d and 23f flows into the inner core portion 21 through the connecting portions 23a and 23b. In this way, by creating a path of magnetic flux from the radial-direction inner end portion of the magnet 30 to the inner core portion 21 by the contact portions 23d and 23f, it is possible to reduce the magnetic flux leaking from the radial-direction inner end portion of the magnet 30 to the space between the inner core portion 21 and the outer core portion 22 in the radial direction. In addition, the two connecting portions 23 connected to the outer core portion 22 are connected to both circumferential-direction end portions of the outer core portion 22. Therefore, the magnetic flux emitted from the magnets 30 adjacent to the outer core portion 22 and merged at the circumferential-direction center of the outer core portion 22 can be suppressed from flowing from the connecting portions 23 to the inner core portion 21. Consequently, the leakage magnetic flux can be suitably reduced. Therefore, it is possible to relatively increase the magnetic flux used as the effective magnetic flux that flows between the outer core portion 22 and the stator 3 and contributes to the rotation of the rotor 10 among the magnetic flux from the magnets 30.

In addition, when the contact portions 23d and 23f of the rotor core 20, which is a magnetic body, come in contact with the circumferential-direction side surfaces of the radial-direction inner end portion of the magnet 30, the permeance coefficient in the magnet 30 becomes large. Thereby, the amount of magnetic flux emitted from the magnet 30 can be increased. Therefore, the effective magnetic flux contributing to the rotation of the rotor 10 can be further increased between the outer core portion 22 and the stator 3.

In this way, according to the present embodiment, because the leakage magnetic flux can be suitably reduced and the effective magnetic flux can be increased, the rotational torque of the motor 1 can be improved.

In addition, the effect of the present embodiment described above cannot be obtained by merely bringing the rotor core 20 into contact with the circumferential-direction side surfaces of the radial-direction inner end portion of the magnet 30. For example, the case where the outer core portion 22 contacts the circumferential-direction side surfaces of the radial-direction inner end portion of the magnets 30 will be considered. Even in this case, the magnetic flux from the radial-direction inner end portion of the magnets 30 can flow into the outer core portion 22 to reduce the magnetic flux leaking from the magnets 30 into the radial-direction inner space. In addition, since the permeance coefficient of the magnets 30 can also be increased, the magnetic flux from the magnets 30 can also be increased.

However, since the magnetic flux flowing from the radial-direction inner end portion of the magnets 30 into the outer core portion 22 flows into the radial-direction-inner-side portion of the outer core portion 22, it is difficult for the magnetic flux to be emitted toward the radial-direction outer side from the outer core portion 22. As a result, the magnetic flux that is not emitted toward the radial-direction outer side is more likely to leak toward the radial-direction inner side from the outer core portion 22. As a result, it is difficult to reduce the leakage magnetic flux sufficiently on the whole.

On the other hand, in the present embodiment, not the outer core portion 22 but portions of the connecting portions 23 connecting the outer core portion 22 and the inner core portion 21 to each other come into contact with the circumferential-direction side surfaces of the radial-direction inner end portion of the magnets 30. Therefore, it is difficult for the magnetic flux from the radial-direction inner end portion of the magnets 30 to flow to the outer core portion 22, and the magnetic flux can be suppressed from leaking toward the radial-direction inner side from the outer core portion 22. In addition, since the connecting portions 23 are thinner than the outer core portion 22 and magnetic flux is less likely to flow therethrough, the amount of magnetic flux flowing from the magnets 30 to the connecting portions 23 can be reduced. As a result, the magnetic flux flowing from the connecting portions 23 to the inner core portion 21 and the magnetic flux flowing from the connecting portions 23 to the outer core portion 22 can be relatively reduced, and the leakage magnetic flux can be easily reduced.

In addition, when the circumferential-direction dimension of the contact portions 23d and 23f changes along the radial direction, the magnetic flux flowing from the contact portions 23d and 23f to the outer core portion 22 or the inner core portion 21 increases and may cause an increase in leakage magnetic flux. On the other hand, in the present embodiment, since the circumferential-direction dimension of the contact portions 23d and 23f is uniform over the entire radial direction, it is possible to suppress an increase in the magnetic flux flowing from the contact portions 23d and 23f to the outer core portion 22 or the inner core portion 21.

As described above, according to the present embodiment, the magnetic flux from the radial-direction inner end portion of the magnets 30 flows to the connecting portions 23 through which the magnetic flux is less likely to pass than the outer core portion 22, whereby the permeance coefficient of the magnets 30 can be increased while suppressing the leakage of the magnetic flux from the magnets 30 and the outer core portion 22 into the radial-direction inner side space. Therefore, according to the present embodiment, because the leakage magnetic flux can be suitably reduced and the effective magnetic flux can be increased, the rotational torque of the motor 1 can be improved.

In addition, according to the present embodiment, the connecting portions 23a and 23b have a uniform dimension in the circumferential direction on the whole, and extend along the circumferential-direction side surfaces of the magnets 30 with which they are in contact. Therefore, for example, as compared with the case where the non-contact portions 23c and 23e are bent with respect to the contact portions 23d and 23f, it is easy to form the connecting portions 23a and 23b on the whole while keeping the contact portions 23d and 23f along the circumferential side surfaces of the magnets 30.

In addition, for example, when a radial-direction dimension L1 of the contact portions 23d and 23f is too small, the magnetic flux directly flowing from the radial-direction inner end portion of the magnets 30 to the outer core portion 22 increases, and the magnetic flux leaking out toward the radial-direction inner side from the outer core portion 22 may increase. On the other hand, in the present embodiment, the radial-direction dimension L1 of the contact portions 23d and 23f is larger than one sixth of a radial-direction dimension ML of the magnets 30. Thus, the radial-direction dimension L1 of the contact portions 23d and 23f can be suitably increased, and the magnetic flux flowing from the radial-direction inner end portion of the magnets 30 to the outer core portion 22 can be suitably reduced.

In addition, for example, when the radial-direction dimension L1 of the contact portions 23d and 23f is too large, portions of the circumferential-direction side surfaces of the portions of the magnets 30 that emit the effective magnetic flux to the outer core portion 22 are also covered by the contact portions 23d and 23f. Therefore, the effective magnetic flux may be reduced and the torque of the motor 1 may be reduced. On the other hand, in the present embodiment, the radial-direction dimension L1 of the contact portions 23d and 23f is smaller than a quarter of the radial-direction dimension ML of the magnets 30. Thus, the radial-direction dimension L1 of the contact portions 23d and 23f can be suitably reduced, and the reduction of the effective magnetic flux can be suppressed.

In addition, since the path of the magnetic flux from the contact portions 23d and 23f to the inner core portion 21 becomes longer as a radial-direction distance L3 between the magnets 30 and the inner core portion 21 increases, the magnetic flux emitted from the radial-direction inner end portion of the magnets 30 is less likely to flow to the inner core portion 21, and the leakage magnetic flux can be reduced.

Concerning this, in the present embodiment, the radial-direction distance L3 between the magnets 30 and the inner core portion 21 is larger than the radial-direction dimension L1 of the contact portions 23d and 23f. Therefore, the path of the magnetic flux from the contact portions 23d and 23f to the inner core portion 21 can be easily lengthened, and the leakage magnetic flux flowing from the contact portions 23d and 23f to the inner core portion 21 can be reduced. Consequently, the leakage magnetic flux in the motor 1 can be suitably reduced and the torque of the motor 1 can be improved.

In addition, in the present embodiment, the radial-direction distance L3 between the magnets 30 and the inner core portion 21 is larger than the circumferential-direction dimension MW of the magnets 30. Therefore, the path of the magnetic flux from the contact portions 23d and 23f to the inner core portion 21 can be easily lengthened, and the leakage magnetic flux flowing from the contact portions 23d and 23f to the inner core portion 21 can be reduced. Consequently, the leakage magnetic flux in the motor 1 can be suitably reduced and the torque of the motor 1 can be improved. In the present embodiment, the circumferential-direction dimension MW of the magnets 30 is larger than the radial-direction dimension L1 of the contact portions 23d and 23f. In the present embodiment, the radial-direction distance L3 between the magnets 30 and the inner core portion 21 is substantially the same as the radial-direction dimension of the non-contact portions 23c and 23e.

In addition, according to the present embodiment, the outer core portion 22 has the recessed portion 22a recessed toward the radial-direction outer side, and both circumferential-direction side surfaces of the recessed portion 22a are inclined toward each other in the circumferential direction as extending toward the radial-direction outer side and connect with each other at the radial-direction outer end portion. Therefore, it is easy to guide the magnetic flux emitted from the magnets 30 to the outer core portion 22 toward the radial-direction outer side along the circumferential-direction side surfaces of the recessed portion 22a. Thereby, the flow of the magnetic flux in the outer core portion 22 is adjusted, and the magnetic flux can be easily released from the outer core portion 22 toward the radial-direction outer side. Therefore, the effective magnetic flux can be suitably increased.

Here, for example, when the depth of the recessed portion 22a is too small, it may be difficult to guide the magnetic flux toward the radial-direction outer side by the circumferential-direction side surfaces of the recessed portion 22a, and the flow of the magnetic flux in the outer core portion 22 may be difficult to control. On the other hand, in the rotor 10 of this embodiment, L2>(ML-L1)/6 is satisfied, where the radial-direction dimension of the contact portions 23d and 23f is L1, the radial-direction distance from the radial-direction inner end portion of the outer core portion 22 to the connection point 22b between the circumferential-direction side surfaces of the recessed portion 22a is L2, and the radial-direction dimension of the magnet 30 is ML. L2 corresponds to the depth of the recessed portion 22a, and ML-L1 corresponds to the radial-direction dimension of the portion of the magnet 30 at which the circumferential-direction side surface thereof is in contact with the outer core portion 22.

By satisfying the above relationship, the depth of the recessed portion 22a can be suitably increased. Therefore, the magnetic flux emitted to the outer core portion 22 from the portion of the magnet 30 at which the circumferential-direction side surface thereof is in contact with the outer core portion 22 is suitably guided toward the radial-direction outer side by the circumferential-direction side surface of the recessed portion 22a, and the flow of magnetic flux in the outer core portion 22 can be suitably controlled. Thus, the effective magnetic flux emitted toward the radial-direction outer side from the outer core portion 22 can be more suitably increased.

Also, for example, when the depth of the recessed portion 22a is too large, the volume of the outer core portion 22 decreases, and the amount of magnetic flux flowing in the outer core portion 22 decreases. Therefore, the effective magnetic flux emitted toward the radial-direction outer side from the outer core portion 22 may be reduced. On the other hand, in the present embodiment, the rotor 10 satisfies L2<(ML-L1)/2. By satisfying such a relationship, the depth of the recessed portion 22a can be suitably reduced. Therefore, reduction in the volume of the outer core portion 22 can be suppressed, and magnetic flux can sufficiently flow in the outer core portion 22. Therefore, it is possible to suppress a reduction in effective magnetic flux.

As illustrated in Fig. 2, the projecting portions 25a and 25b protrude from the connecting portions 23 in the circumferential direction. The projecting portions 25a and 25b provided on the pair of connecting portions 23a and 23b project from the non-contact portions 23c and 23e in the circumferential direction toward each other. The projecting portions 25a and 25b provided in the pair of connecting portions 23a and 23b face each other in the circumferential direction with a gap therebetween. The projecting portions 25a and 25b are disposed on the radial-direction inner side of the magnet 30 so as to face each other. Therefore, it is possible to suppress movement of the magnet 30 toward the radial-direction inner side by the projecting portions 25a and 25b. The projecting portions 25a and 25b such as these can be easily provided only because the pair of connecting portions 23a and 23b interposing the radial-direction inner end portion of the magnet 30 in the circumferential direction are provided.

In the present embodiment, on the radial-direction inner side of the magnet 30, the pair of projecting portions 25a and 25b provided on the pair of connecting portions 23a and 23b are disposed so as to face each other. In the present embodiment, a gap is provided between the projecting portions 25a and 25b and the radial-direction inner end portion of the magnet 30 in the radial direction.

As illustrated in Fig. 3, in the present embodiment, an axial-direction dimension of the projecting portions 25a and 25b is smaller than an axial-direction dimension of the connecting portions 23a and 23b. Therefore, for example, the amount of leakage magnetic flux leaking from the projecting portions 25a and 25b can be reduced compared with the case where the axial-direction dimensions of the projecting portions 25a and 25b are the same as the axial-direction dimensions of the connecting portions 23a and 23b. As a result, even if the projecting portions 25a and 25b are provided, it is possible to suppress an increase in the leakage magnetic flux.

The axial-direction dimension of the projecting portion 25a and the axial-direction dimension of the projecting portion 25b are, for example, the same as each other. In the present embodiment, a pair of the projecting portions 25a are provided at both axial-direction end portions of the connecting portion 23a. The pair of projecting portions 25a are arranged symmetrically with respect to the axial-direction center of the rotor core 20. In the present embodiment, a pair of projecting portions 25b are provided at both axial end portions of the connecting portion 23b. The pair of projecting portions 25b are arranged symmetrically with respect to the axial-direction center of the rotor core 20. In this way, by arranging the projecting portions 25a and 25b symmetrically with respect to the axial-direction center of the rotor core 20, it is possible to suppress the rotation balance of the rotor 10 from becoming unstable.

In the present embodiment, the rotor core 20 is configured by stacking a plurality of electromagnetic steel plates in the axial direction. The electromagnetic steel plates forming the rotor core 20 include two types, namely, electromagnetic steel plates forming the portions provided with the projecting portions 25a and 25b in the axial direction and electromagnetic steel plates forming the portions not provided with the projecting portions 25a and 25b in the axial direction. In the present embodiment, the portions of the rotor core 20 provided with the projecting portions 25a and 25b in the axial direction include an upper end portion of the rotor core 20 and a lower end portion of the rotor core 20.

The present disclosure is not limited to the above-described embodiment, and other configurations can be adopted. The connecting portions need not have a uniform circumferential-direction dimension as long as the circumferential-direction dimension at the contact portions is uniform. For example, the circumferential-direction dimension of the non-contact portions not in contact with the magnet in the connecting portions may be changed. The two connecting portions connected to the outer core portion may be connected on the radial-direction outer side of the inner core portion to be one and connected to the inner core portion. The connecting portions need not extend along the circumferential-direction side as long as they extend along the circumferential-direction side at the radial-direction inner end portion of the magnet at the contact portion. For example, the non-contact portions of the connecting portions not in contact with the magnet may be bent and may extend in the circumferential direction with respect to the contact portions.

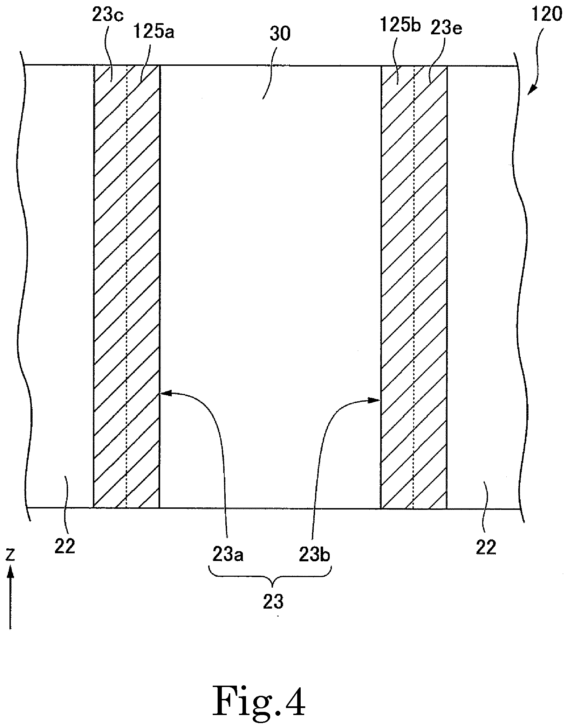

The axial-direction dimension of the projecting portions may be the same as the axial-direction dimension of the connecting portions 23a and 23b, similarly to projecting portions 125a and 125b illustrated in Fig. 4. The projecting portions 125a and 125b extend in the axial direction from one axial-direction-side end portion to the other axial-direction-side end portion of the connecting portions 23a and 23b. In this case, the electromagnetic steel plates forming a rotor core 120 can be of one type. Therefore, the manufacture of the rotor core 120 is easy. The projecting portions may be provided on only one of the pair of connecting portions that interpose the radial-direction inner end portion of the magnet in the circumferential direction. The projecting portions need not be provided.

A support may be provided to fix and support the rotor core and the magnet. The support is, for example, a resin mold made of resin. In this case, the magnet and the rotor core can be fixed by the support without fixing with an adhesive or the like.

The application of the rotor and motor of the embodiment described above is not particularly limited. The rotor and the motor of the embodiment described above are mounted on, for example, a vehicle, an unmanned mobile unit, an electrically assisted device, a robot device, or the like. Further, the configurations described in this specification can be suitably combined to the extent they are not inconsistent with each other.

## Claims

1. A rotor (10) rotatable about a center axis (J), comprising:
a rotor core (20) including an inner core portion (21) that has an annular shape along a circumferential direction, a plurality of outer core portions (22) disposed at intervals from each other along the circumferential direction on a radial-direction outer side of the inner core portion (21), and a plurality of connecting portions (23) located between the outer core portions (22) and the inner core portion (21) in a radial direction and connecting the outer core portions (22) and the inner core portion (21) to each other; and
a plurality of magnets (30) each located between corresponding ones of the outer core portions (22) adjacent in the circumferential direction and disposed on the radial-direction outer side of the inner core portion (21),
wherein each of the outer core portions (22) is connected to the inner core portion (21) by two of the connecting portions (23) extending toward a radial-direction inner side from both circumferential-direction end portions of the outer core portion (22),
wherein the plurality of connecting portions (23) include pairs of the connecting portions (23), wherein a radial-direction inner end portion of a corresponding one of the magnets (30) is interposed in the circumferential direction between the connecting portions (23) of each pair,
wherein each of the pairs of the connecting portions (23) has contact portions (23d, 23f) that are in contact with circumferential-direction side surfaces of the radial-direction inner end portion of the corresponding magnet (30),
wherein the contact portions (23d, 23f) are uniform in a circumferential-direction dimension and extend along the circumferential-direction side surfaces of the magnet (30) with which they are in contact, **characterized in that** a radial-direction dimension (L1) of each of the contact portions (23d, 23f) is larger than one sixth of a radial-direction dimension (ML) of each of the magnets (30) .

2. The rotor (10) according to Claim 1,
wherein the two connecting portions (23) extending toward the radial-direction inner side from both circumferential-direction end portions of the outer core portion (22) each directly connect to the inner core portion (21) .

3. The rotor (10) according to Claim 1 or 2,
wherein the connecting portions (23) have a uniform circumferential-direction dimension on the whole and extend along the circumferential-direction side surfaces.

4. The rotor (10) according to any one of Claims 1 to 3,
wherein a radial-direction distance (L3) between each of the magnets (30) and the inner core portion (21) is larger than the radial-direction dimension (L1) of each of the contact portions (23d, 23f).

5. The rotor (10) according to any one of Claims 1 to 4,
wherein the radial-direction distance (L3) between each of the magnets (30) and the inner core portion (21) is larger than a circumferential-direction dimension (MW) of each of the magnets (30).

6. The rotor (10) according to any one of Claims 1 to 5,
wherein the radial-direction dimension (L1) of each of the contact portions (23d, 23f) is smaller than a quarter of the radial-direction dimension (ML) of each of the magnets (30) .

7. The rotor (10) according to any one of Claims 1 to 6,
wherein each of the outer core portions (22) has a recessed portion (22a), which is recessed toward the radial-direction outer side from a circumferential-direction center portion of a radial-direction inner end portion of the outer core portion (22), and
wherein circumferential-direction side surfaces of the recessed portion (22a) are inclined toward each other in the circumferential direction as extending toward the radial-direction outer side and are mutually connected at a radial-direction outer end portion.

8. The rotor (10) according to Claim 7,
wherein L2>(ML-L1)/6 is satisfied, where the radial-direction dimension of each of the contact portions (23d, 23f) is L1, a radial-direction distance from the radial-direction inner end portion of the outer core portion (22) to a connection point between the circumferential-direction side surfaces of the recessed portion (22a) is L2, and the radial-direction dimension of each of the magnets (30) is ML.

9. The rotor (10) according to Claim 8,
wherein L2<(ML-L1)/2 is satisfied.

10. The rotor (10) according to any one of Claims 1 to 9,
wherein the rotor core (20) includes projecting portions (25a, 25b) each protruding in the circumferential direction from a corresponding one of the connecting portions (23), and
wherein the projecting portions (25a, 25b) are disposed on the radial-direction inner side of each of the magnets (30) so as to face each other.

11. The rotor (10) according to Claim 10,
wherein an axial-direction dimension of each of the projecting portions (25a, 25b) is smaller than an axial-direction dimension of each of the connecting portions (23).

12. The rotor (10) according to Claim 10,
wherein the projecting portions (125a, 125b) extend in an axial direction from one axial-direction-side end portion of each of the connecting portions (23) to another axial-direction-side end portion of each of the connecting portions (23).

13. A motor (1) comprising the rotor (10) according to any one of Claims 1 to 12.

## Patentansprüche

1. Rotor (10), der um eine Zentralachse (J) drehbar ist, aufweisend:
einen Rotorkern (20), der einen inneren Kernabschnitt (21), der in Umfangsrichtung ringförmig ist, eine Mehrzahl von äußeren Kernabschnitten (22), die entlang der Umfangsrichtung an einer Radialrichtungsaußenseite des inneren Kernabschnitts (21) in Intervallen zueinander angeordnet sind, und eine Mehrzahl von Verbindungsabschnitten (23), die sich in einer Radialrichtung zwischen den äußeren Kernabschnitten (22) und dem inneren Kernabschnitt (21) befinden und die äußeren Kernabschnitte (22) und den inneren Kernabschnitt (21) miteinander verbinden, aufweist, und
eine Mehrzahl von Magneten (30), die sich jeweils zwischen korrespondierenden der äußeren Kernabschnitte (22), die in Umfangsrichtung benachbart sind, befinden und an der Radialrichtungsaußenseite des inneren Kernabschnitts (21) angeordnet sind,
wobei jeder der äußeren Kernabschnitte (22) durch zwei der Verbindungsabschnitte (23), die sich zu einer Radialrichtungsinnenseite von beiden Umfangsrichtungsendabschnitten des äußeren Kernabschnitts (22) erstrecken, mit dem inneren Kernabschnitt (21) verbunden ist,
wobei die Mehrzahl der Verbindungsabschnitte (23) Paare der Verbindungsabschnitte (23) aufweist,
wobei ein Radialrichtungsinnenendabschnitt eines korrespondierenden der Magnete (30) in der Umfangsrichtung zwischen den Verbindungsabschnitten (23) von jedem Paar angeordnet ist,
wobei jedes der Paare der Verbindungsabschnitte (23) Kontaktabschnitte (23d, 23f) aufweist, die in Kontakt mit Umfangsrichtungsseitenflächen des Radialrichtungsinnenendabschnitts des korrespondierenden Magnets (30) stehen,
wobei die Kontaktabschnitte (23d, 23f) in einer Umfangsrichtungsabmessung einheitlich sind und sich entlang der Umfangsrichtungsseitenflächen des Magnets (30), mit dem sie in Kontakt stehen, erstrecken,
**dadurch gekennzeichnet, dass**
eine Radialrichtungsabmessung (L1) von jedem der Kontaktabschnitte (23d, 23f) größer ist als ein Sechstel einer Radialrichtungsabmessung (ML) von jedem der Magneten (30).

2. Der Rotor (10) nach Anspruch 1,
wobei die beiden Verbindungsabschnitte (23), die sich zur Radialrichtungsinnenseite von beiden Umfangsrichtungsendabschnitten des äußeren Kernabschnitts (22) erstrecken, jeweils direkt mit dem inneren Kernabschnitt (21) verbunden sind.

3. Der Rotor (10) nach Anspruch 1 oder 2,
wobei die Verbindungsabschnitte (23) im Ganzen eine einheitliche Umfangsrichtungsabmessung haben und sich entlang der Umfangsrichtungsseitenflächen erstrecken.

4. Der Rotor (10) nach irgendeinem der Ansprüche 1 bis 3,
wobei ein Radialrichtungsabstand (L3) zwischen jedem der Magnete (30) und dem inneren Kernabschnitt (21) größer ist als die Radialrichtungsabmessung (L1) von jedem der Kontaktabschnitte (23d, 23f).

5. Der Rotor (1) nach irgendeinem der Ansprüche 1 bis 4,
wobei der Radialrichtungsabstand (L3) zwischen jedem der Magnete (30) und dem inneren Kernabschnitt (21) größer ist als eine Umfangsrichtungsabmessung (MW) von jedem der Magnete.

6. Der Rotor (10) nach irgendeinem der Ansprüche 1 bis 5,
wobei die Radialrichtungsabmessung (L1) von jedem der Kontaktabschnitte (23d, 23f) kleiner ist als ein Viertel der Radialrichtungsabmessung (ML) von jedem der Magnete (30).

7. Der Rotor (10) nach irgendeinem der Ansprüche 1 bis 6,
wobei jeder der äußeren Kernabschnitte (22) einen ausgenommenen Abschnitt (22a) aufweist, der zur Radialrichtungsaußenseite von einem Umfangsrichtungszentralabschnitt eines Radialrichtungsinnenendabschnitts des äußeren Kernabschnitts (22) ausgenommen ist, und
wobei Umfangsrichtungsseitenflächen des ausgenommenen Abschnitts (22a) mit zunehmender Erstreckung zur Radialrichtungsaußenseite in Umfangsrichtung zueinander geneigt und an einem Radialrichtungsaußenendabschnitt miteinander verbunden sind.

8. Der Rotor (10) nach Anspruch 7,
wobei L2>(ML-L1)/6 erfüllt ist, wobei die Radialrichtungsabmessung von jedem der Kontaktabschnitte (23d, 23f) L1 ist, ein Radialrichtungsabstand vom Radialrichtungsinnenendabschnitt des äußeren Kernabschnitts (22) zu einem Verbindungspunkt zwischen den Umfangsrichtungsseitenflächen des ausgenommenen Abschnitts (22a) L2 ist und die Radialrichtungsabmessung von jedem der Magnete (30) ML ist.

9. Der Rotor (10) nach Anspruch 8,
wobei L2<(ML-L1)/2 erfüllt ist.

10. Der Rotor (10) nach irgendeinem der Ansprüche 1 bis 9,
wobei der Rotorkern (20) vorstehende Abschnitte (25a, 25b) aufweist, die jeweils in der Umfangsrichtung von einem korrespondierenden der Verbindungsabschnitte (23) vorstehen, und
wobei die vorstehenden Abschnitte (25a, 25b) an der Radialrichtungsinnenseite von jedem der Magnete (30) derart angeordnet sind, dass sie einander zugewandt sind.

11. Der Rotor (10) nach Anspruch 10,
wobei eine Axialrichtungsabmessung von jedem der vorstehenden Abschnitte (25a, 25b) kleiner ist als eine Axialrichtungsabmessung von jedem der Verbindungsabschnitte (23).

12. Der Rotor (10) nach Anspruch 10,
wobei sich die vorstehenden Abschnitte (125a, 125b) in Axialrichtung von einem Axialrichtungsseitenendabschnitt von jedem der Verbindungsabschnitte (23) zu einem anderen Axialrichtungsseitenendabschnitt von jedem der Verbindungsabschnitte (23) erstrecken.

13. Motor (1), der den Rotor (10) nach irgendeinem der Ansprüche 1 bis 12 aufweist.

## Revendications

1. Rotor (10) pouvant tourner autour d'un axe central (J), comprenant :
un noyau de rotor (20) comprenant une partie noyau intérieur (21) qui présente une forme annulaire le long d'une direction circonférentielle, une pluralité de parties noyaux extérieures (22) disposées les unes par rapport aux autres selon des intervalles, le long de la direction circonférentielle d'un côté extérieur dans la direction radiale de la partie noyau intérieure (21), et une pluralité de parties connexions (23) situées entre les parties noyaux extérieures (22) et la partie noyau intérieure (21) dans la direction radiale, et qui connectent entre elles les parties noyaux extérieures (22) et la partie noyau intérieure (21) ; et
une pluralité d'aimants (30), chacun d'eux étant situé entre celles correspondantes des parties noyaux extérieures (22) adjacentes dans la direction circonférentielle, et disposé sur le côté extérieur dans la direction radiale de la partie noyau intérieur (21),
dans lequel chacune des parties noyaux extérieures (22) est connectée à la partie noyau intérieure (21) par deux des parties connexions (23) s'étendant vers un côté intérieur dans la direction radiale à partir de deux parties extrémités dans la direction circonférentielle de la partie noyau extérieure (22),
dans lequel la pluralité de parties connexions (23) comprend des paires de parties connexions (23),
dans lequel une partie extrémité intérieure dans la direction radiale de l'un correspondant des aimants (30), est interposée dans la direction circonférentielle entre les parties connexions (23) de chaque paire,
dans lequel chacune des paires de parties connexions (23) présente des parties contacts (23d, 23f) qui sont en contact avec les surfaces latérales dans la direction circonférentielle de la partie extrémité intérieure dans la direction radiale de l'aimant correspondant (30),
dans lequel les parties contacts (23d, 23f) présentent une dimension uniforme dans la direction circonférentielle, et s'étendent le long des surfaces latérales dans la direction circonférentielle de l'aimant (30) avec lequel elles sont en contact, **caractérisé en ce que**
la dimension dans la direction radiale (L1) de chacune des parties contacts (23d, 23f) est plus grande qu'un sixième de la dimension dans la direction radiale (ML) de chacun des aimants (30).

2. Rotor (10) selon la revendication 1,
dans lequel les deux parties connexions (23) s'étendant vers le côté intérieur dans la direction radiale à partir des deux parties extrémités dans la direction circonférentielle de la partie noyau extérieure (22), sont chacune connectées directement à la partie noyau intérieure (21).

3. Rotor (10) selon la revendication 1 ou 2,
dans lequel les parties connexions (23) présentent dans l'ensemble une dimension uniforme dans la direction circonférentielle, et s'étendent le long des surfaces latérales dans la direction circonférentielle.

4. Rotor (10) selon l'une quelconque des revendications 1 à 3,
dans lequel la distance dans la direction radiale (L3) entre chacun des aimants (30) et la partie noyau intérieure (21), est supérieure à la dimension dans la direction radiale (L1) de chacune des parties contacts (23d, 23f).

5. Rotor (10) selon l'une quelconque des revendications 1 à 4,
dans lequel la distance dans la direction radiale (L3) entre chacun des aimants (30) et la partie noyau intérieure (21), est supérieure à la dimension dans la direction circonférentielle (MW) de chacun des aimants (30).

6. Rotor (10) selon l'une quelconque des revendications 1 à 5,
dans lequel la dimension dans la direction radiale (L1) de chacune des parties contacts (23d, 23f) est plus petite qu'un quart de la dimension dans la direction radiale (ML) de chacun des aimants (30).

7. Rotor (10) selon l'une quelconque des revendications 1 à 6,
dans lequel chacune des parties noyaux extérieures (22) présente une partie renfoncée (22a), qui est renfoncée vers le côté extérieur dans la direction circonférentielle à partir d'une partie centrale dans la direction circonférentielle d'une partie extrémité intérieure dans la direction radiale de la partie noyau extérieure (22), et
dans lequel les surfaces latérales dans la direction circonférentielle de la partie renfoncée (22a), sont inclinées l'une vers l'autre dans la direction circonférentielle quand elles s'étendent vers le côté extérieur dans la direction radiale, et sont mutuellement connectées au niveau d'une partie extrémité extérieure dans la direction radiale.

8. Rotor (10) selon la revendication 7,
dans lequel la relation L2 > (ML - L1) / 6 est satisfaite, dans lequel la dimension dans la direction radiale de chacune des parties contacts (23d, 23f), est représentée par L1, la distance dans la direction radiale de la partie extrémité intérieure dans la direction radiale de la partie noyau extérieure (22) au niveau d'un point de connexion entre les surfaces latérales dans la direction circonférentielle de la partie renfoncée (22a), est représentée par L2, et la dimension dans la direction radiale de chacun des aimants (30), est représentée par ML.

9. Rotor (10) selon la revendication 8,
dans lequel la relation L2 < (ML - L1) / 2 est satisfaite.

10. Rotor (10) selon l'une quelconque des revendications 1 à 9,
dans lequel le noyau de rotor (20) comprend des parties saillantes (25a, 25b), chacune d'elles faisant saillie dans la direction circonférentielle de l'une correspondante des parties connexions (23), et
dans lequel les parties saillantes (25a, 25b) sont disposées sur le côté intérieur dans la direction radiale de chacun des aimants (30) afin de se faire face.

11. Rotor (10) selon la revendication 10,
dans lequel la dimension dans la direction axiale de chacune des parties saillantes (25a, 25b), est plus petite que la dimension dans la direction axiale de chacune des parties connexions (23).

12. Rotor (10) selon la revendication 10,
dans lequel les parties saillantes (125a, 125b) s'étendent dans une direction axiale à partir d'une partie extrémité du côté dans la direction axiale de chacune des parties connexions (23), vers une autre partie extrémité du côté dans la direction axiale de chacune des parties connexions (23).

13. Moteur (1) comprenant le rotor (10) selon l'une quelconque des revendications 1 à 12.
